## Europäisches Patentamt
## European Patent Office
## Office européen des brevets

(11) Veröffentlichungsnummer: **0 357 559 B1**

(12) **EUROPÄISCHE PATENTSCHRIFT**

(45) Veröffentlichungstag der Patentschrift: **19.10.94**

(51) Int. Cl.5: **A01N 25/04**

(21) Anmeldenummer: **89810631.5**

(22) Anmeldetag: **24.08.89**

(54) **Wässrige Formulierungen und deren Verwendung.**

(30) Priorität: **02.09.88 CH 3282/88**

(43) Veröffentlichungstag der Anmeldung:
**07.03.90 Patentblatt 90/10**

(45) Bekanntmachung des Hinweises auf die
Patenterteilung:
**19.10.94 Patentblatt 94/42**

(84) Benannte Vertragsstaaten:
**AT BE CH DE ES FR GB GR IT LI LU NL SE**

(56) Entgegenhaltungen:
**EP-A- 0 093 105**
**GB-A- 2 162 423**
**US-A- 3 681 348**
**US-A- 4 044 118**

**CENTRAL PATENTS INDEX, BASIC AB-STRACTS JOURNAL, Sektion C, Woche D32, 30.September 1987, Accession Nr. 57762D/32, Derwent Publications Ltd, London, GB;& JP-A-56 075 409 (SUMITOMOCHEMICAL K.K.) 22-06-1981**

**CHEMICAL PATENTS INDEX, DOCUMENTATION ABSTRACTS JOURNAL, Sektion C, Woche 8908,19. April 1989, Accession Nr. 89-057667/08, Derwent Publications Ltd, Lon-**
**don,GB; & JP-A-01 009 901 (TOHO CHEM. IND.LTD) 13-01-1989**

**CENTRAL PATENTS INDEX,BASIC AB-STRACTS JOURNAL; Sektion C, Woche D32, 30.September 1987, Accession Nr.57762D/32, Derwent Publications Ltd, London, GB; & JP-A-56075409 (SUMITOMO CHEMICAL K.K.) 22-06-1981**

(73) Patentinhaber: **HOECHST AKTIENGESELL-SCHAFT**

**D-65926 Frankturt (DE)**

(72) Erfinder: **Damo, Zoltan, Dr.**
**Am Holderbusch 24**
**D-6239 Eppstein 2 (DE)**
Erfinder: **Neuenschwander, Ernst, Dr.**
**Moosweg 20**
**CH-4125 Riehen (CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft neue wässrige Formulierungen von in Wasser schwer löslichen agrochemischen Wirkstoffen. Diese neuen Formulierungen stellen entweder Wasser-in-Oel oder Oel-in-Wasser Emulsionen dar. Die neuen Formulierungen können in vorteilhafter Weise als Saatbeizmittel Verwendung finden.

Emulsionen, die in Wasser nur schwer lösliche Wirkstoffe der oben bezeichneten Art enthalten, neigen beim längeren Stehen zum Auskristallisieren oder zum Brechen (Entmischen) der Emulsion und sind damit nur begrenzt lager- und anwendungsstabil.

JP-A-72 24 128 nennt wäßrige Formulierungen auf Basis von Dimethoat als agrochemischen Wirkstoff, die eine Mischung aus Phenol, Kresol oder Xylol und Ethyenglykolmonophenylether enthalten.

JP-A-56 075 409 beschreibt wäßrige Formulierungen, die neben einem herbiziden Wirkstoff und einem Phenol bzw. Phenolderivat zwingend einen aromatischen Kohlenwasserstoff enthalten.

JP-A-01 009 901 offenbart wäßrige Formulierungen von agrochemischen Wirkstoffen, die einen aromatischen Kohlenwasserstoff enthalten.

EP-A-0 093 105 betrifft ein herbizides Emulsionskonzentrat, das neben einem Wirkstoff, einem Emulgator und einem langkettigen Alkohol noch einen Gehalt von 15 bis 30 Gew.-% an organischem Kohlenwasserstoff aufweist.

Es wurde nun gefunden, dass bei in Wasser schwer löslichen Wirkstoffen die Ausbildung von Kristallen oder auch das Brechen wässriger Emulsionen verhindert und damit die Lagerfähigkeit verbessert werden kann, wenn man diese Wirkstoffe mit Hilfe der im folgenden beschriebenen Verbindungen in wässrige Formulierungen überführt. So zeigen zum Beispiel wässrige Formulierungen herkömmlicher Art im Falle des Wirkstoffs Furathiocarb O-Butyl-O-2,3-dihydro-2,2-dimethylbenzofuran-7-yl-N,N'-dimethyl-N,N'-thiodicarbamat) eine ausgeprägte Tendenz zum Auskristallisieren dieses Wirkstoffs.

Gegenstand der Erfindung sind somit wässrige Formulierungen enthaltend 1 bis 70, vorzugsweise 20 bis 70 Gew.-% eines in Wasser schwer löslichen agrochemischen Wirkstoffs neben einer die Kristallisation der Aktivsubstanz oder das Brechen der Emulsion inhibierenden Menge einer Verbindung der Formel I

R-O-M     (I),

worin

R    $C_{12}$-$C_{20}$-Alkyl; $C_{12}$-$C_{20}$-Alkenyl; Phenyl; 4-Biphenylyl; 2- bis 3-fach durch $\alpha$-Methylbenzyl oder $\alpha$-Methyl-4-methylbenzyl substituiertes Phenyl; oder 1- bis 3-fach durch Alkyl substituiertes Phenyl bedeutet, wobei die Summe der in den Alkylgruppen vorliegenden Kohlenstoffatome 1 bis 18 beträgt; und

M    Wasserstoff; ein Kationenäquivalent eines Alkali- oder Erdalkaliions; oder falls R Phenyl, 4-Biphenylyl, durch $\alpha$-Methylbenzyl, $\alpha$-Methyl-4-methylbenzyl oder Alkyl substituiertes Phenyl ist und auch für ein Ammonium, mono - oder di-Ethanolammonium stehen kann;

sowie gewünschtenfalls weitere Formulierungshilfsstoffe und/oder weitere agrochemische Wirkstoffe, mit der Maßgabe, daß die wäßrige Formulierung keine weiteren organischen Lösungsmittel enthält.

Als bei agrochemischen Formulierungen gebräuchliche Formulierungshilfsstoffe sind unter anderem zu nennen: Emulgatoren, Dispergatoren, Verdicker, Antischaummittel, Stabilisatoren, Farbstoffe, Haftmittel, Konservierungsmittel, Puffer und Kältestabilisatoren.

Agrochemische Wirkstoffe sind insbesondere Herbizide, Fungizide, Insektizide, Akarizide, Gametozide, Rodentizide, Nematizide, Wachstumsregulatoren und Safener. Als in Wasser schwerlöslich sind diejenigen agrochemischen Wirkstoffe anzusehen, welche bei 20 °C zu weniger als 1 % in Wasser löslich sind.

In vorteilhafter Weise ist der erfindungsgemäss vorgeschlagene Formulierungstyp für agrochemische Wirkstoffe geeignet, die einen Schmelzpunkt im Bereich von -5 °C bis +70 °C aufweisen.

Somit kommen als Wirkstoffe sowohl Substanzen in Frage, die bei Raumtemperatur flüssig sind, als auch Substanzen, die bei Raumtemperatur fest sind. Gleichwohl tritt das Problem des Auskristallisierens der Aktivsubstanz auch bei den bei Raumtemperatur (Temperaturen unter 40 °C) flüssigen Aktivsubstanzen auf, da agrochemische Formulierungen auch bei tieferen Temperaturen (z.B. Lagerung in ungeheizten Räumen) kältestabil sein müssen.

Als agrochemischer Wirkstoff ist insbesondere das Insektizid Furathiocarb (Butyl 2,3-Dihydro-2,2-dimethyl-benzofuran-7-yl-N,N'-dimethyl-N,N'-thiodicarbamat) zu nennen, welches in "The Pesticide Manual, 7th Ed. The British Crop Prot. Counc. (Ed), 6850" und in der britischen Patentschrift 1 583 713 beschrieben ist. Als weitere geeignete Wirkstoffe sind das Insektizid Methidathion (S-2,3-Dihydro-5-methoxy-2-oxo-1,3,4-thiadiazol-3-ylmethyl-O,O-dimethyldithiophosphat; Pesticide Manual, 8th Ed. 1987, Seite 546) und das Herbizid Trimexachlor (N-Chloracetyl-N-isopropyl-3,3,5-trimethylcyclohex-1-enamin, beschrieben in EP-A-O O13 429) zu nennen.

Die Verbindungen der Formel I entsprechen aufgrund ihrer chemischen Struktur Phenolen, gesättigten oder ungesättigten Alkoholen.

Aus der Gruppe der Phenole sind die nachstehend genannten Untergruppen bevorzugt:

a) Phenol

b) 4-Hydroxybiphenylyl

c) 1- bis 3-fach durch $(C_1-C_6)$-Alkylgruppen substituierte Phenole; wie etwa Mono-butylphenol, Di-butylphenol, Tri-butylphenol; besonders bevorzugt sind die sek-Butylphenole wie Mono-sek-butylphenol, Di-sek-butylphenol, Tri-sek-butylphenol,

d) 1-fach durch eine $(C_6-C_{18})$-Alkylgruppe substituierte Phenole; wie etwa Nonylphenol, Octylphenol, Dodecylphenol,

e) 2-fach durch $(C_4-C_9)$-Alkylgruppen substituierte Phenole; wie etwa Di-nonylphenol, Di-octylphenol,

f) 2- bis 3-fach durch α-Methylbenzyl oder α-Methyl-4-methylbenzyl substituierte Phenole; wie etwa 2,4,6-Tris-[α-methylbenzyl]-phenol; 2,4,6-Tris-[α-methyl-4-methylbenzyl]-phenol.

Aus der Gruppe der gesättigten und ungesättigten Alkohole sind primäre gesättigte oder primäre 1- bis 3-fach ungesättigte $(C_{12}-C_{20})$-Alkohole bevorzugt, also Fettalkohole wie z.B. Oleylalkohol, Laurylalkohol oder Stearylalkohol.

Die Fettalkohole können, bedingt durch ihr Herstellungsverfahren auch als Gemisch unterschiedlicher Alkohole vorliegen; wie etwa Cocosfettalkohol.

Die Verbindungen der Formel I können beispielsweise auch in Form ihrer Alkali- oder Erdalkalisalze (wie etwa der Li-, Na-, K-, Ca- oder Mg-Salze) oder im Falle der Phenole auch in Form ihrer Ammonium- oder anderer Aminsalze (wie etwa der mono- oder di-Ethanolammoniumsalze) vorliegen.

Die Salze der Formel I (in denen M nicht für Wasserstoff steht) können auch in Mischungen mit anderen Salzen von Verbindungen der Formel I oder auch in Mischung mit Alkoholen oder Phenolen der Formel I (in denen M für Wasserstoff steht) vorliegen.

Die zur Verhinderung der Kristallisation der agrochemischen Wirkstoffe mindestens erforderliche Menge an Verbindungen I kann durch einfache Versuche ermittelt werden. In vorteilhafter Weise beträgt das Gewichtsverhältnis von agrochemischen Wirkstoff zu der Verbindung der Formel I 20:1 bis 3:1, insbesondere 10:1 bis 5:1.

In vorteilhafter Weise können die agrochemischen Wirkstoffe mit den Verbindungen der Formel I angelöst und danach in der wässrigen Phase dispergiert werden. Wirkstoffe, die bei Raumtemperatur fest sind werden durch Erwärmen (vor oder nach dem Zumischen der Verbindung der Formel I) verflüssigt.

Es wurde gefunden, dass die Verbindungen der Formel I in wässrigen agrochemischen Formulierungen auch eine gewisse Emulgierwirkung aufweisen.

Dies bewirkt als weiteren vorteilhaften Effekt, dass bei Verwendung von Verbindungen der Formel I der Anteil an Formulierungshilfsstoffen in agrochemischen Formulierungen verringert werden kann.

Neben den eingangs aufgeführten Verbindungen der Formel (I) können die erfindungsgemässen Formulierungen aber auch noch Emulgatoren enthalten. Bevorzugt sind nichtionische oder anionische Emulgatoren in Mengen von O,1 - 10 Gew.%, vorzugsweise O,5 - 5 Gew.%.

Geeignete anionische Emulgatoren können sowohl sog. wasserlösliche Seifen als auch wasserlösliche synthetische oberflächenaktive Verbindungen sein.

Als Seifen seien die Alkali-, Erdalkali- oder gegebenenfalls substituierte Ammoniumsalze von höheren Fettsäuren $(C_{10}-C_{22})$, wie z.B. die Na- oder K-Salze der Oel- oder Stearinsäure, oder von natürlichen Fettsäuregemischen, die z.B. aus Kokosnuss- oder Talgöl gewonnen werden können, genannt.

Häufiger werden jedoch sogenannte synthetische Emulgatoren verwendet, insbesondere Fettsulfonate, Fettsulfate, sulfonierte Benzimidazolderivate oder Alkylarylsulfonate, wie etwa das Calciumdodecylbenzolsulfonat.

Als nicht ionische Emulgatoren kommen in erster Linie Polyglykoletherderivate von aliphatischen oder cycloaliphatischen Alkoholen, gesättigten oder ungesättigten Fettsäuren und Alkylphenolen in Frage, die 3 bis 10 Glykolethergruppen und 8 bis 20 Kohlenstoffatome im (aliphatischen) Kohlenwasserstoffrest und 6 bis 18 Kohlenstoffatome im Alkylrest der Alkylphenole enthalten können.

Als Beispiele nichtionischer Emulgatoren seien Nonylphenolpolyethoxyethanole, Ricinusölpolyglykolether, Polypropylen-Polyethylenoxidaddukte, Tributylphenoxypolyethoxyethanol, Polyethylenglykol und Octylphenoxypolyethoxyethanolerwähnt.

Als Zusatzstoffe, die in den erfindungsgemässen Formulierungen enthalten sein können, kommen auch Konservierungsmittel, Farbstoffe, Puffer, Kältestabilisatoren und Mittel zur Verbesserung der chemischen Stabilität des Wirkstoffs in Betracht. Als Beispiele für Konservierungsmittel seien 2-Hydroxybiphenyl und Sorbinsäure genannt. Als Beispiele für Farbstoffe seien Azofarbstoffe und Phthalocyanin-Farbstoffe angeführt. Als Puffersubstanz sei hier Natriumdihydrogenphosphat, Ammoniumacetat, Diammoniumphosphat erwähnt. Als Beispiele für Kältestabilisatoren seien vorzugsweise Glyzerin, aber auch Harnstoff, Ethylenglykol, Propylenglykol, Polyglykole, verschiedene Zucker und Salze, wie Ammoniumsulfat und Natriumoleat genannt. Diese Kältestabilisatoren können in der erfindungsgemässen Emulsion in Mengen von 2 bis 20, vorzugsweise 5 bis 15 Gew.-% anwesend sein. Die Kristallisationsinhibitoren werden wässrigen Formulierungen zur Verbesserung der Kältestabilität der wässrigen Phase zugesetzt, wogegen die Verbindungen der Formel I unter anderem eine Verbesserung der Kältestabilität der emulgierten organischen Phase bewirken. Als Haftmittel zu nennen sind unter anderem wässrige Polymersuspensionen, wie etwa Latexsuspensionen.

Die erfindungsgemässen Formulierungen werden in ihrer allgemeinen Form so hergestellt, dass man eine Mischung aus Wirkstoff und Verbindung der Formel (I) unter Rühren in der erforderlichen Menge Wasser emulgiert. Soll die Formulierung noch weitere Substanzen der oben aufgeführten Art enthalten, so werden im allgemeinen die wasserlöslichen Substanzen zunächst in der erforderlichen Menge Wasser gelöst. Hierzu wird dann unter Rühren das Gemisch aller nicht in Wasser löslichen Komponenten emulgiert. Solche Wirkstoffe, die in fester Form vorliegen, können zunächst zusammen mit der Verbindung der Formel I verflüssigt werden. Zu dieser Lösung werden dann alle anderen nicht in Wasser löslichen Komponenten gegeben und diese Mischung wird dann in Wasser emulgiert.

Die Zugabe der verschiedenen Phasen zueinander erfolgt zweckmässigerweise langsam unter gleichmässigem Rühren bei Raumtemperatur oder bei erhöhter Temperatur, z.B. bei Temperaturen zwischen 10 und 60°C, mit üblichen Rührgeräten. Dabei bildet sich eine feinteilige Emulsion. Eine Nachbehandlung der entstehenden Emulsion ist nicht notwendig, kann aber vorgenommen werden, sofern diese gewünscht wird.

Die erfindungsgemässen Formulierungen können entweder in der zubereiteten Form oder nach vorheriger Verdünnung appliziert werden. Die Aufwandmenge richtet sich dabei nach der Konzentration der Wirkstoffe in der Emulsion und nach der jeweiligen Indikation.

Die Anwendung der erfindungsgemässen Emulsionen erfolgt nach den üblichen Methoden, also z.B. durch Spritzen, Sprühen oder Giessen.

Die erfindungsgemässen Formulierungen sind insbesondere für solche agrochemischen Zubereitungen geeignet, in denen die wässrige Formulierung unverdünnt oder nur mässig mit Wasser verdünnt angewendet wird.

Dies sind insbesondere Saatbeizmittel von Herbiziden, Fungiziden, Insektiziden, Akariziden, Gametoziden, Nematiziden, Rodentizide, Wachstumsregulatoren oder von Safenern (Safener sind Stoffe mit kulturpflanzenprotektiver Wirkung).

Insgesamt zeichnen sich die erfindungsgemässen Formulierungen durch eine Reihe von Vorteilen aus:
- keine Kristallbildung
- bei Langzeitlagerung bleiben diese Emulsionen zwischen -10°C bis +54°C physikalisch unverändert,
- außer Verbindungen der Formel I, keine weitere für wäßrige Formulierungen üblichen organischen Lösungsmittel
- hoher Flammpunkt der Emulsionen,
- keine Geruchsbelästigung durch organische Lösemittel,
- einfache Herstellungsweise der Emulsionen,
- hohe Pflanzen- und Saatgutverträglichkeit,
- keine nachteilige Beeinflussung der Wirkungsstärke des agrochemischen Wirkstoffs.

Für die Anwendungen als Saatbeizmittel sind die vorstehend genannten und generell für den erfindungsgemässen Formulierungstyp angegebenen Vorteile von besonderer Bedeutung.

Insbesondere hat sich gezeigt, dass das mit der erfindungsgemässen Formulierung behandelte Saatgut eine, im Vergleich zur unbehandelten Kontrolle, gute Keimfähigkeit besitzt. Daher können die erfindungsgemässen Formulierungen in besonders vorteilhafter Weise als Saatbeizmittel eingesetzt werden.

Unter dem Begriff Saatgut sind alle generativen Pflanzenteile zu verstehen, die zur Vermehrung der Kulturpflanze eingesetzt werden können. Dazu zählen z.B. Samenkörner (Saatgut im engeren Sinne), Wurzeln, Früchte oder Knollen.

In erster Linie werden Saatbeizmittel aber zur Behandlung von Samenkörnern verwendet. Von besonderer Bedeutung sind dabei Samenkörner der folgenden Pflanzenarten:
Getreide (Weizen, Gerste, Roggen, Hafer, Reis, Sorghum und Verwandte); Rüben (Zucker- und Futterrüben); Hülsenfrüchte (Bohnen, Linsen, Erbsen, Soja); Oelkulturen (Raps, Senf, Mohn, Oliven, Sonnenblumen, Kokos, Rizinus, Erdnüsse); Gurkengewächse (Kürbis, Gurken, Melonen); Fasergewächse (Baumwolle, Flachs, Hanf, Jute); Gemüsesorten (Spinat, Kopfsalat, Spargel, Kohlarten, Möhren, Zwiebeln, Tomaten, Kartoffeln, Paprika); oder Mais; sowie Zierpflanzen und Gräser. Bevorzugt werden Mais- und Zuckerrübensaatgut behandelt.

Die Erfindung betrifft auch ein Verfahren zur Saatbeizung unter Verwendung der erfindungsgemässen wässrigen Formulierungen und das behandelte Saatgut.

Die Erfindung betrifft ebenfalls die Verwendung der Verbindungen der Formel I gemäß Anspruch 1 in einer wäßrigen Formulierung, enthaltend 1 bis 70 Gew.-% eines in Wasser schwer löslichen agrochemischen Wirkstoffs sowie gewünschtenfalls weitere Formulierungshilfsstoffe und/oder weitere agrochemische Wirkstoffe zur Inhibierung der Kristallisation der Aktivsubstanz oder des Brechens der Emulsion.

Beispiel 1

Die in den folgenden Tabellen aufgeführten Formulierungen werden hergestellt, indem der Wirkstoff Furathiocarb bei 40 bis 50°C mit den Verbindungen der Formel I und gegebenenfalls weiteren Emulgatoren vermischt wird. Die dabei entstehende homogene Lösung wird dann innerhalb von 2 bis 4 Minuten unter Rühren in der erforderlichen Menge Wasser emulgiert. Nach beendeter Zugabe wird noch 5 Minuten nachgerührt. Man erhält leicht gefärbte, viskose Emulsionen. Diese Emulsionen werden bei 20°C bzw. -5°C bis +54°C gelagert und deren Stabilität überwacht.

In den Formulierungsbeispielen 1 bis 29 sind Rezepturen angegeben, die während sechmonatiger Lagerung keine Kristallisation des Wirkstoffs zeigen. Lässt man in den Formulierungen gemäss Beispiel 1 bis 29 die Verbindung der Formel I weg, kristallisiert der Wirkstoff bereits nach wenigen Tagen aus.

Alle Formulierungen 1 bis 29 enthalten Wasser in der jeweils sich zu 100 Gew.-% ergänzenden Menge.

Emulgator 1 ist Calcium-Dodecylbenzolsulfonat,

Emulgator 2 ist ein n-Butanol-Propylenoxid-Ethylenoxid Blockpolymer; Gewichtsanteil Propylenoxid 44 %, Gewichtanteil Ethylenoxid 54 %.

Tabelle 1

| Formulierung No | | 1 | 2 | 3 | 4 | 5 | 6 | 7 | 8 | 9 | 10 | 11 |
|---|---|---|---|---|---|---|---|---|---|---|---|---|
| Furathiocarb | % | 50,0 | 50,0 | 50,0 | 50,0 | 50,0 | 50,0 | 50,0 | 50,0 | 50,0 | 50,0 | 50,0 |
| Emulgator 1 | % | 0,4 | 0,4 | 0,4 | 0,4 | 0,4 | – | – | 0,4 | 0,4 | – | – |
| Emulgator 2 | % | 0,6 | 0,6 | 0,6 | 0,6 | 0,6 | – | – | 0,6 | 0,6 | – | – |
| Mono-sek-butylphenol | % | 10,0 | 15,0 | – | – | – | – | – | – | – | – | – |
| Di-sek-butylphenol | % | – | – | 10,0 | 15,0 | 20,0 | – | – | – | – | – | – |
| Tri-sek-butylphenol | % | – | – | – | – | – | 10,0 | 15,0 | 10,0 | 15,0 | – | – |
| Oleylalkohol | % | – | – | – | – | – | – | – | – | – | 25,0 | 30,0 |

| Formulierung No | | 12 | 13 | 14 | 15 | 16 |
|---|---|---|---|---|---|---|
| Furathiocarb | % | 50,0 | 50,0 | 50,0 | 50,0 | 50,0 |
| Mono-n-nonylphenol | % | 5,0 | 10,0 | 15,0 | – | – |
| n-Nonylphenol 98,9 %<br>Na-n-Nonylphenolat: 1,1 % | | – | – | – | 10,0 | 15,0 |

| Formulierung No | | 17 | 18 | 19 | 20 | 21 | 22 | 23 | 24 | 25 |
|---|---|---|---|---|---|---|---|---|---|---|
| Furathiocarb | % | 50,0 | 50,0 | 50,0 | 50,0 | 50,0 | 50,0 | 50,0 | 50,0 | 50,0 |
| Di-n-nonylphenol | % | 10,0 | 15,0 | 10,0 | - | - | - | - | - | - |
| Emulgator 1 | : % | - | - | 0,4 | - | 0,4 | - | - | | - |
| Emulgator 2 | % | - | - | 0,6 | - | 0,6 | - | - | | |
| n-Octylphenol | % | - | - | - | 10,0 | 10,0 | - | - | - | - |
| n-Dodecylphenol | % | - | - | - | - | - | 10,0 | 15,0 | - | - |
| n-Dodecylphenol 98,6 % Na-n-Dodecyl-phenolat 1,4 % | | - | - | - | - | - | - | - | 10,0 | 15,0 |

| Formulierung No | | 26 | 27 | 28 | 29 |
|---|---|---|---|---|---|
| Furathiocarb | % | 50,0 | 50,0 | 50,0 | 50,0 |
| Trimethyl-styrylphenol 97,6 % Trimethyl-styrylphenol 2,4 % | | 15,0 | 10,0 | - | - |
| Trimethyl-styrylphenol | % | - | - | 15,0 | 10,0 |

Beispiel 2

Behandlung von Zuckerrübensamen

1 kg Zuckerrübensamen der Sorte KWS Kawevera werden mit 40 g einer wässerigen wie folgt zusammengesetzten Formulierung gebeizt:

50 % Furathiocarb
15 % Tri-sek-butylphenol
5 % 1,2-Propylenglykol
30 % Wasser

Die Formulierung wird in einem Beizgerät mittels Schleuderscheibe auf das Saatgut aufgebracht und 2 Minuten nachgemischt, so dass eine gleichmässige Verteilung erreicht wird.

In Vergleichsversuchen werden analoge Formulierungen, die jedoch anstelle von 15 % Tri-sek-butylphenol, Xylol oder Adipinsäuredioctylester enthalten, in gleicher Weise auf die Zuckerrübensamen aufgebracht.

Das behandelte Saatgut wird folgendermassen auf Keimfähigkeit geprüft. 4 x je 25 Körner werden in einen angefeuchteten Faltenfilter gegeben, der 7 Tage in einem Keimschrank (Temp. = 25°C, rel. LF = 95 %, Licht 8 Std./Tag) gestellt wird. Darauf zählt man, wie viele der pro Test insgesamt 100 Körner gekeimt sind.

Der in diesem Beispiel beschriebene Versuch ergibt folgendes Resultat:

|  | Keimzahl in % |
|---|---|
| Kontrolle | 95 |
| Formulierung mit Tri-sek-butylphenol | 93 |
| Formulierung mit Xylol | 53 |
| Formulierung mit Adipinsäuredioctylester | 15 |

Beispiel 3

Behandlung von Mais-Saatgut

1 kg Mais der Sorte Blizzard werden mit 33 g einer wässerigen wie folgt zusammengesetzten Formulierung gebeizt:

30 % Furathiocarb

6 % Tri-sek-butylphenol

33 % Haftmittel (wässrige Latexsuspensionen)

1,5 % Emulgator (nichtionisches Tensid)

0,3 % Antischaum (Siliconöl)

0,2 % Farbstoff (®Irgalit rot)

29 % Wasser

Das Produkt wird in einem Trommelmisther auf das Saatgut aufgegossen und sofort 3 Minuten intensiv gemischt. Anschliessend werden 18 g einer Mischung von Talk und Na-Al-Silicat im Verhältnis 2:1 und 1 % Farbstoff zugegeben und weitere 5 Minuten gemischt.

In Vergleichsversuchen werden analoge Formulierungen, die jedoch anstelle von 6 % Tri-sec. Butylphenol, Cyclohexanon, Xylol oder Dimethylphthalat enthalten, in gleicher Weise auf das Mais-Saatgut aufgebracht.

Das behandelte Saatgut wird wie in Beispiel 2 beschrieben auf Keimfähigkeit geprüft.

Der in diesem Beispiel beschriebene Versuch ergibt folgendes Resultat:

|  | Keimzahl in % |
|---|---|
| Kontrolle | 96 |
| Formulierung mit Tri-sek-butylphenol | 99 |
| Formulierung mit Cyclohexanon | 54 |
| Formulierung mit Xylol | 31 |
| Formulierung mit Dimethylphthalat | 23 |

**Patentansprüche**

**1.** Wässrige Formulierung enthaltend 1 bis 70 Gew.%, eines in Wasser schwer löslichen agrochemischen Wirkstoffs neben einer die Kristallisation der Aktivsubstanz oder das Brechen der Emulsion inhibierenden Menge einer Verbindung der Formel I

R-O-M    (I),

worin

R    $C_{12}$-$C_{20}$-Alkyl; $C_{12}$-$C_{20}$-Alkenyl; Phenyl; 4-Biphenylyl; 2- bis 3-fach durch α-Methylbenzyl oder α-Methyl-4-methylbenzyl substituiertes Phenyl; oder 1- bis 3-fach durch Alkyl substituiertes Phenyl bedeutet, wobei die Summe der in den Alkylgruppen vorliegenden Kohlenstoffatome 1 bis 18 beträgt; und

M    Wasserstoff; ein Kationenäquivalent eines Alkali- oder Erdalkaliions; oder falls R Phenyl, 4-Biphenylyl, durch α-Methylbenzyl, α-Methyl-4-methylbenzyl oder Alkyl substituiertes Phenyl ist und auch für ein Ammonium, mono- oder di-Ethanolammonium stehen kann;

sowie gewünschtenfalls weitere Formulierungshilfsstoffe und/oder weitere agrochemische Wirkstoffe, mit der Maßgabe, daß die wäßrige Formulierung keine weiteren organischen Lösungsmittel enthält.

2.    Wässrige Formulierung nach Anspruch 1, gekennzeichnet durch einen Gehalt von 20 bis 70 Gew.% eines in Wasser schwer löslichen agrochemischen Wirkstoffs.

3.    Wässrige Formulierung gemäss Anspruch 1 oder 2, enthaltend Butylphenol, Di-butylphenol, Tri-butylphenol, Tetra-butylphenol, Oleylalkohol, Laurylalkohol, Stearylalkohol, Cocosfettalkohol, Nonylphenol, Di-nonylphenol, Octylphenol, Di-octylphenol, Dodecylphenol, 2,4,6-Tris-[α-methyl-4-methylbenzyl]-phenol oder 2,4,6-Tris-[α-methylbenzyl]-phenol oder deren Salze als Verbindung der Formel I.

4.    Wässrige Formulierung gemäss Anspruch 3, dadurch gekennzeichnet, dass diese als Verbindung der Formel I mindestens ein sek-Butylphenol enthält.

5.    Wässrige Formulierungen gemäss einem oder mehreren der Ansprüche 1 bis 4 gekennzeichnet durch ein Gewichtsverhältnis von agrochemischen Wirkstoff zu Verbindung der Formel I von 20:1 bis 3:1.

6.    Wässrige Formulierung gemäss einem oder mehreren der Ansprüche 1 bis 5 enthaltend 0,1 bis 10 Gew % eines Emulgators.

7.    Wässrige Formulierung gemäss einem oder mehreren der Ansprüche 1 bis 6 enthaltend 2 bis 20 % eines Kältestabilisators.

8.    Wässrige Formulierung gemäss einem oder mehreren der Ansprüche 1 bis 7 enthaltend einen im Bereich von -5° bis +70°C schmelzenden agrochemischen Wirkstoff.

9.    Wässrige Formulierung nach Anspruch 8 enthaltend Furathiocarb als Wirkstoff.

10.   Wässrige Formulierung nach einem oder mehreren der Ansprüche 1 bis 8 enthaltend Methidathion als Wirkstoff.

11.   Wässrige Formulierung nach einem oder mehreren der Ansprüche 1 bis 8 enthaltend Trimexachlor als Wirkstoff.

12.   Saatbeizmittel bestehend aus einer wässrigen Formulierung gemäss einem der Ansprüche 1 bis 10.

13.   Saatbeizmittel gemäss Anspruch 12 enthaltend als Wirkstoff Furathiocarb oder Methidathion und ein Haftmittel.

14.   Verfahren zur Beizung von Saatgut, dadurch gekennzeichnet, dass man das Saatgut mit einer herbizid, fungizid, insektizid, akarizid, gametozid, nematizid, rodentizid pflanzenwuchsregulatorisch oder kulturpflanzenprotektiv wirksamen Menge einer wässrigen agrochemischen Formulierung gemäss einem oder mehreren der Ansprüche 1 bis 10, 12 oder 13 behandelt.

15.   Verfahren nach Anspruch 14, dadurch gekennzeichnet, dass man das Saatgut mit einem Saatbeizmittel nach Anspruch 12 oder 13 behandelt.

16.   Das mit einer herbizid, fungizid, rodentizid, insektizid, akarizid, gametozid, nematizid, pflanzenwuchsregulatorisch oder kulturpflanzenprotektiv wirksamen Menge einer agrochemischen Formulierung nach einem oder mehreren der Ansprüche 1 bis 10, 12 oder 13 behandelte Saatgut.

17.   Saatgut nach Anspruch 16, welches mit einem Saatbeizmittel nach Anspruch 12 oder 13 behandelt worden ist.

**18.** Saatgut nach Anspruch 17, dadurch gekennzeichnet, dass es sich um gemäss Anspruch 12 oder 13 behandeltes Mais- oder Zuckerrübensaatgut handelt.

**19.** Verwendung der Verbindungen der Formel I gemäß Anspruch 1 in einer wässrigen Formulierung enthaltend 1 bis 70 Gew.-% eines in Wasser schwer löslichen agrochemischen Wirkstoffs sowie gewünschtenfalls weitere Formulierungshilfsstoffe und/oder weitere agrochemische Wirkstoffe zur Inhibierung der Kristallisation der Aktivsubstanz oder des Brechens der Emulsion.

**Claims**

**1.** An aqueous formulation which contains 1 to 70% by weight of an agrochemical active substance which is sparingly soluble in water, besides an mount which inhibits crystallization of the active substance or breaking of the emulsion, of a compound of the formula I

R-O-M    (I),

where

R     is $C_{12}$-$C_{20}$alkyl; $C_{12}$-$C_{20}$alkenyl; phenyl; 4-biphenylyl; phenyl which is disubstituted to trisubstituted by $\alpha$-methylbenzyl or $\alpha$-methyl-4-methylbenzyl; or phenyl which is monosubstituted to trisubstituted by alkyl, the total of the carbon atoms in the alkyl groups being 1 to 18; and

M     is hydrogen; a cation equivalent of an alkali metal ion or alkaline earth metal ion; or, in the event that R is phenyl, 4-biphenylyl or phenyl which is substituted by $\alpha$-methylbenzyl, $\alpha$-methyl-4-methylbenzyl or alkyl, M can also be ammonium, monoethanolammonium or diethanolammonium;

and, if desired, other formulation auxiliaries and/or further agrochemical active substances, with the proviso that the aqueous formulation does not contain any further organic solvents.

**2.** An aqueous formulation according to claim 1, containing 20 to 70% by weight of an agrochemical active substance which is sparingly soluble in water.

**3.** An aqueous formulation according to claim 1 or 2, which contains, as the compound of the formula I, butylphenol, di-butylphenol, tri-butylphenol, tetra-butylphenol, oleyl alcohol, lauryl alcohol, stearyl alcohol, coconut fat alcohol, nonylphenol, di-nonylphenol, octylphenol, di-octylphenol, dodecylphenol, 2,4,6-tris-[$\alpha$-methyl-4-methylbenzyl]phenol or 2,4,6-tris-[$\alpha$-methyl-4-methylbenzyl]phenol or their salts.

**4.** An aqueous formulation according to claim 3, containing, as the compound of the formula I, at least one sec-butylphenol.

**5.** An aqueous formulation according to one or more of claims 1 to 4, wherein the ratio by weight of agrochemical active substance to compound of the formula I is 20:1 to 3:1.

**6.** An aqueous formulation according to one or more of claims 1 to 5, which contains 0.1 to 10% by weight of an emulsifier.

**7.** An aqueous formulation according to one or more of claims 1 to 6, which contains 2 to 20% of a low-temperature stabilizer.

**8.** An aqueous formulation according to one or more of claims 1 to 7, which contains an agrochemical active substance which melts in the range from -5° to +70°C.

**9.** An aqueous formulation according to claim 8, which contains furathiocarb as the active substance.

**10.** An aqueous formulation according to one or more of claims 1 to 8, which contains methidathion as the active substance.

**11.** An aqueous formulation according to one or more of claims 1 to 8, which contains trimexachlor as the active substance.

EP 0 357 559 B1

**12.** A seed-dressing agent consisting of an aqueous formulation according to any one of claims 1 to 10.

**13.** A seed-dressing agent according to claim 12, which contains a tackifier and, as the active substance, furathiocarb or methidathion.

**14.** A process for dressing seed, which comprises treating the seed with a herbicidally, fungicidally, insecticidally, acaricidally, gametocidally, nematicidally, rodenticidally, plant-growth regulatory or crop-plant protectively effective amount of an aqueous agrochemical formulation according to one or more of claims 1 to 10, 12 or 13.

**15.** A process according to claim 14, wherein the seed is treated with a seed-dressing agent according to claim 12 or 13.

**16.** Seed treated with a herbicidally, fungicidally, rodenticidally, insecticidally, acaricidally, gametocidally, nematicidally, plant-growth regulatory or crop-plant protectively effective amount of an agrochemical formulation according to one or more of claims 1 to 10, 12 or 13.

**17.** Seed according to claim 16, which has been treated with a seed-dressing agent according to claim 12 or 13.

**18.** Seed according to claim 17, which is maize or sugar beet seed treated according to claim 12 or 13.

**19.** The use of a compound of the formula I according to claim 1 in an aqueous formulation which contains 1 to 70% by weight of an agrochemical active substance which is sparingly soluble in water and, if desired, other formulation auxiliaries and/or further agrochemical active substances, for inhibiting crystallization of the active substance or breaking of the emulsion.

**Revendications**

**1.** Formulation aqueuse comportant de 1 à 70 % en poids d'une matière active agrochimique difficilement soluble dans l'eau, en plus d'une quantité, inhibant la cristallisation de la substance active ou la floculation de l'émulsion, d'un composé de formule I

R-O-M     (I),

où
R représente un alkyle en $C_{12}$-$C_{20}$ ; un alcényle en $C_{12}$-$C_{20}$ ; le phényle ; le 4-biphénylyle ; un phényle substitué de 2 à 3 fois par l'α-méthylbenzyle ou l'α-méthyl-4-méthylbenzyle ; ou un phényle substitue de 1 à 3 fois par un alkyle, la somme des atomes d'hydrogène présents dans les groupes alkyles étant de 1 à 18 ; et
M représente l'hydrogène ; un équivalent cationique d'un ion alcalin ou alcalino-terreux ; ou, si R représente le phényle, le 4-biphénylyle, un phényle substitué par l'α -méthylbenzyle, l'α-méthyl-4-méthylbenzyle ou un alkyle, il peut aussi représenter un ammonium, un mono ou di-éthanolammonium ;
ainsi, le cas échéant, que d'autres adjuvants de formulation et/ou d'autres matières actives agrochimiques, à la condition que la formulation aqueuse ne comporte aucun autre solvant organique.

**2.** Formulation aqueuse selon la revendication 1, caractérisée en ce que l'on a une teneur de 20 à 70 % en poids d'une matière active agrochimique difficilement soluble dans l'eau.

**3.** Formulation aqueuse selon la revendication 1 ou 2, comportant du butylphénol, du di-butylphénol, du tri-butylphénol, du tétra-butylphénol, de l'alcool oléylique, de l'alcool laurylique, de l'alcool stéarylique, de l'alcool gras de coco, du nonylphénol, du di-nonylphénol, de l'octylphénol, du di-octylphénol, du dodécylphénol, du 2,4,6-tris-[α-méthyl-4-méthylbenzyl]-phénol ou du 2,4,6-tris-[α-méthylbenzyl]-phénol ou leurs sels comme composé de formule I.

**4.** Formulation aqueuse selon la revendication 3, caractérisée en ce que celle-ci comporte comme composé de formule I au moins un sec-butylphénol.

11

**5.** Formulations aqueuses selon une ou plusieurs des revendications 1 à 4, caractérisées en ce que le rapport pondéral entre la matière active agrochimique et le composé de formule I est de 20:1 à 3:1.

**6.** Formulation aqueuse selon une ou plusieurs des revendications 1 à 5 comportant de 0,1 à 10 % en poids d'un émulsifiant.

**7.** Formulation aqueuse selon une ou plusieurs des revendications 1 à 6 comportant de 2 à 20 % d'un stabilisant au froid.

**8.** Formulation aqueuse selon une ou plusieurs des revendications 1 à 7 comportant une matière active agrochimique qui fond dans le domaine de -5° à + 70°C.

**9.** Formulation aqueuse selon la revendication 8 comportant du Furathiocarb comme matière active.

**10.** Formulation aqueuse selon une ou plusieurs des revendications 1 à 8 comportant du Méthidathion comme matière active.

**11.** Formulation aqueuse selon une ou plusieurs des revendications 1 à 8 comportant du Trimexachlor comme matière active.

**12.** Produit pour traiter les semences constitué d'une formulation aqueuse selon une des revendications 1 à 10.

**13.** Produit pour traiter les semences selon la revendication 12, comportant comme matière active du Furathiocarb ou du Méthidation et un agent d'adhésion.

**14.** Procédé pour traiter les semences caractérisé en ce que l'on traite la semence avec une quantité efficace pour l'action herbicide, fongicide, insecticide, acaricide, gamétocide, nématicide, rodenticide, pour la régulation de la croissance des plantes ou pour la protection des plantes de cultures, d'une formulation aqueuse agrochimique selon une ou plusieurs des revendications 1 à 10, 12 ou 13.

**15.** Procédé selon la revendication 14, caractérisé en ce que l'on traite la semence avec un produit pour traiter les semences selon la revendication 12 ou 13

**16.** Semence traitée avec une quantité efficace pour l'action herbicide, fongicide, rodenticide, insecticide, acaricide, gamétocide, nématicide, pour la régulation de la croissance des plantes ou pour la protection des plantes de cultures, d'une formulation agrochimique selon une ou plusieurs des revendications 1 à 10; 12 ou 13.

**17.** Semence selon la revendication 16, qui a été traitée avec un produit de traitement des semences selon la revendication 12 ou 13.

**18.** Semence selon la revendication 17, caractérisée en ce qu'il s'agit d'une semence de maïs ou de betterave sucrière traitée conformément à la revendication 12 ou 13.

**19.** Utilisation des composés de formule I selon la revendication 1 dans une formulation aqueuse comportant de 1 à 70 % en poids d'une matière active agrochimique difficilement soluble dans l'eau ainsi que, le cas échéant, d'autres adjuvants de formulation et/ou d'autres matières actives agrochimiques pour inhiber la cristallisation de la substance active ou pour éviter la floculation de l'émulsion.